# EUROPEAN PATENT APPLICATION

(11) **EP 2 332 426 A1**
(43) Date of publication of application: **15.06.2011**
(21) Application number: 09178817.4
(22) Date of filing: 11.12.2009
(51) Int. Cl.: A23L 1/236, A23L 1/30, A23L 1/308

(54) **Prebiotic**

(71) Applicant: Technische Universität Graz, 8010 Graz (AT); Forschungsholding TU Graz GmbH, 8010 Graz (AT)
(72) Inventor: Schwarz, Alexandra, 8010 Graz (AT); Nidetzky, Bernd, 8010 Graz (AT)
(74) Representative: Sonn & Partner Patentanwälte

(57) **Abstract**

The present invention relates to the use of 2-O-glyceryl-α-D-glucopyranoside as prebiotic.

## Description

The present invention relates to the use of 2-O-glyceryl-α-D-glucopyranoside as prebiotic.

Prebiotics are non digestible food ingredients which stimulate the growth and activity of beneficial microorganisms in the intestinal tract, mainly bifidobacteria and lactobacilli. The function of prebiotic substances is - in contrast to probiotic bacteria - not affected by the cooking process. Prebiotics mainly consist of oligosaccharides, sugar molecules of three to six chains and soluble fiber.

Probiotic bacteria are normally not found in the human intestinal tract, because these bacteria do not colonize well and are eliminated rather quickly. Prebiotic food ingredients encourage probiotic organisms to survive and thrive in the human gut.

It has been proven that the symbiotic relationship between prebiotics and probiotics significantly contributes to humans' health. Prebiotics and probiotics together show anticarcinogenic and antimicrobial activity, may lower triglyceride levels, stabilize blood glucose levels, boost the immune system, help to improve mineral absorption and balance, rid the gut of harmful microorganisms and help to prevent constipation and diarrhea.

Prebiotic carbohydrates are regularly found in fruit and vegetables such as bananas, berries, asparagus, garlic, wheat, oatmeal, barley (and other whole grains), flaxseed, tomatoes, Jerusalem artichoke, onions and chicory, spinach, chard, kale, and legumes like lentils, kidney beans, chickpeas, navy beans, white beans and black beans.

Oligosaccharides which exhibit prebiotics characteristics are, for instance, fiber gums, fructo-oligosaccharides (FOS), inulins, isomalto-oligosaccharides, lactilol, lactosucrose, lactulose, oligofructose, pyrodextrins, soy oligosaccharides, transgalacto-oligosaccharides (TOS), and xylo-oligosaccharides.

Commonly known and used prebiotics have several disadvantages. Some of the prebiotics known have no selective effect on specific intestinal bacteria. This means that theses prebiotics support the growth of all organisms in the intestinal tract, indifferently from their benefit to the human health. Other prebiotics cause flatulences, abdominal pain, eructation, bloating stomach, diarrhoea (due to osmogenic retention of fluid in the intestine) or even allergic reactions. Lactulose has been found to be unpalatable and may cause nausea, vomiting, abdominal cramps and diarrhoea.

It is an object of the present invention to provide new prebiotics which overcome the disadvantages of the prebiotics known in the art.

The present invention relates to the use of 2-O-glyceryl-α-D-glucopyranoside as prebiotic.

2-O-glyceryl-α-D-glucopyranoside (GG) is a naturally occurring molecule (a glycoside; a carbohydrate derivative) which serves the function of an osmoprotective substance and stabilizer in various microorganisms. Several publications have shown that isolated 2-O-glyceryl-α-D-glucopyranoside has a range of outstanding properties which are of substantial interest for technological application. Uses of 2-O-glyceryl-α-D-glucopyranoside and derivatives thereof include but are not limited to the fields of medicine (cancer therapy), cosmetics (moisturizing and stabilizing additive to a range of products), and antidiabetics. Furthermore, 2-O-glyceryl-α-D-glucopyranoside is a very efficient stabilizer of biomolecules (proteins, lipids) .

It surprisingly turned out that 2-O-glyceryl-α-D-glucopyranoside specifically stimulates the growth of probiotic microorganisms like Lactobacillus acidophilus and bifidobacteria. However, the growth of other intestinal microorganisms (e.g. E. coli, enterococci) is not or not substantially influenced when 2-O-glyceryl-α-D-glucopyranoside is administered to an individual or when said microorganisms are cultivated in a medium comprising 2-O-glyceryl-α-D-glucopyranoside.

2-O-glyceryl-α-D-glucopyranoside can be produced by chemical as well as by enzymatic methods. Chemical methods may involve various start compounds like maltitol, isomaltose, trehalulose etc. (see e.g. Takenaka F. et al. Biosci. Biotechnol. Biochem. (2000) 64:378-385). Enzymes which catalyze the synthesis of 2-O-glyceryl-α-D-glucopyranoside may involve α-glucosidase (Takenaka F. and Uchiyama H. Biosci. Biotechnol. Biochem. (2000) 64:1821-1826), cyclodextrin glucanotransferase (Nakano H. et al. J. Biosci. Bioeng. (2003) 95:583-588), glucosyl-glycerolphosphate synthase (Marin K. et al. J. Bacteriol. (1998) 180:4843-4849) and plant glucosidase II (Kaushal GP et al. Arch. Biochem. Biophys. (1989) 272:481-487). In the WO 2008/034158 the biosynthesis of 2-O-glyceryl-α-D-glucopyranoside involving sucrose phosphorylase (EC 2.4.1.7) as catalyzing enzyme, sucrose or glucose-1-phosphate as glucosyl donor and glycerol as glucosyl acceptor is disclosed.

According to a preferred embodiment of the present invention 2-O-glyceryl-α-D-glucopyranoside is comprised in a prebiotic composition comprising at least one probiotic microroganism, in particular probiotic bacteria, and/or at least one compound selected from the group consisting of enzymes, vitamins, amino acids, mineral salts, preservatives, stabilizers, sweeteners, flavourings, carriers, lubricants, dispersers, thickeners, humectants and gelling agents.

The composition may also comprise one or more probiotic microorganisms unable to directly ferment 2-O-glyceryl-α-D-glucopyranoside as such, having complementary features, namely different intrinsic properties.

In order to increase the prebiotic properties of 2-O-glyceryl-α-D-glucopyranoside it is advantageous to combine 2-O-glyceryl-α-D-glucopyranoside in a composition with other prebiotics. Furthermore 2-O-glyceryl-α-D-glucopyranoside may also be combined with probiotic microorganisms.

The at least one probiotic microorganism is preferably selected from the group of Lactobacilli, Bifidobacteria, Streptococci, Lactococci and Saccharomyces.

It turned out that these probiotic microorganisms are especially suited to be combined with 2-O-glyceryl-α-D-glucopyranoside. In particular these probiotics are able to grow significantly better in the presence of 2-O-glyceryl-α-D-glucopyranoside compared to other non-probiotic microorganisms present in the intestinal tract.

Particularly preferred probiotic microorganisms are lactic acid bacteria, bifidobacteria and bacilli. These microorganisms are preferably selected from the group consisting of Bacillus coagulans, Bifidobacterium animalis subsp. lactis (BB-12), Bifidobacterium breve (Yakult), Bifidobacterium infantis (35624), Bifidobacterium animalis subsp. lactis (HN019 (DR10)), Bifidobacterium longum (BB536), Lactobacillus acidophilus DDS-1, Lactobacillus acidophilus LA-5, Lactobacillus acidophilus NCFM, Lactobacillus casei DN114-001, Lactobacillus casei CRL431, Lactobacillus casei F19, Lactobacillus casei Shirota, Lactobacillus paracasei (St11 (or NCC2461)), Lactobacillus fortis, Lactobacillus johnsonii La1 (= Lactobacillus LC1, Lactobacillus johnsonii NCC533), Lactococcus lactis (L1A), Lactobacillus plantarum (299V), Lactobacillus reuteri (ATTC 55730), Lactobacillus rhamnosus ATCC 53013, Lactobacillus rhamnosus LB21, Lactobacillus pentosus, Lactobacillus grasseri, Saccharomyces cerevisiae (boulardii) and combinations thereof. Preferred combinations comprise Lactobacillus rhamnosus GR-1 and Lactobacillus reuteri RC-14; Lactobacillus acidophilus NCFM and Bifidobacterium bifidum BB-12; Lactobacillus acidophilus CL1285 and Lactobacillus casei; Lactobacillus helveticus R0052 and Lactobacillus rhamnosus R0011; *Bifidobacterium bifidum, Bifidobacterium breve, Bifidobacterium infantis, Bifidobacterium lactis, Bifidobacterium longum, Lactobacillus acidophilus, Lactobacillus brevis, Lactobacillus bulgaricus, Lactobacillus casei, Lactobacillus gasseri, Lactobacillus paracasei, Lactobacillus plantarum, Lactobacillus rhamnosus, Lactobacillus salivarius, Lactococcus lactis* and *Streptococcus thermophilus; Lactobacillus acidophilus* and Bifi*dobacterium longum; Lactobacillus acidophilus, Bifidobacterium bifidum* and *Bifidobacterium longum; Bifidobacterium bifidum, Lactobacillus acidophilus, Lactobacillus rhamnosus, Bifidobacterium breve, Bifidobacterium longum, Lactobacillus casei, Lactobacillus plantarum, Lactococcus lactis, Lactobacillus bulgaricus* and *Lactobacillus salivarius.*

According to a preferred embodiment of the present invention 2-O-glyceryl-α-D-glucopyranoside is provided in said composition in an amount of 0,01 to 20% (w/w), preferably 0,05 to 10% (w/w), more preferably 0,1 to 5% (w/w). Of course, the prebiotic composition of the present invention may also comprise up to 30%, 40%, 50%, 60%, 70%, 75%, 80%, 85%, 90%, 95% 2-O-glyceryl-α-D-glucopyranoside.

The probiotic microorganism which may be present in the prebiotic composition of the present invention may be comprised in said composition in an amount of 10²-10¹⁰ cfu (colony forming unit)/g of the composition, preferably 10²-10⁸ cfu/g, more preferably 10²-10⁶ cfu/g.

Another aspect of the present invention relates to a composition comprising 2-O-glyceryl-α-D-glucopyranoside and at least one probiotic microorganism.

It is advantageous to provide the prebiotic 2-O-glyceryl-α-D-glucopyranoside together with at least one probiotic microorganism in one single composition. Said composition may have different forms depending on the route of administration.

The composition according to the present invention may be introduced into a delivery tube, such as an enteral feeding tube, preferably by first wetting the particulate beneficial substance and then placing it in the tube's conduit, where it is directly conveyed to the gastrointestinal tract, preferably downstream of the stomach and most preferably to the jejunum. This may be done by placing the composition of the present invention into a syringe and adding water. The dispersion obtained can then be placed directly into the conduit.

In a particularly preferred embodiment of the present invention the prebiotic 2-O-glyceryl-α-D-glucopyranoside or the composition comprising said prebiotic is provided in the form of a tablet or capsule. Any capsule or tablet suitable for at least partially protecting the probiotic as it passes through the stomach, thus allowing a greater amount of probiotic to enter the large intestine than would enter without use of the capsule or tablet, may be used. Such a tablet may have a generally homogenous composition or include individual layers containing the various constituents of the tablet (such as the probiotic and prebiotic).

Tablets according to the invention can be produced in any suitable manner, and two particular methods are described herein. First, the powder mixtures of carriers and auxiliaries (e.g., release agents) and active ingredients (probiotics, vitamins, prebiotics, etc.) may be placed in a commercially available tabletting machine in one or more layers. The probiotic should not be exposed to any constituent that would destabilizing or destroy it. Each ingredient should be well dried and preferably have a water content of 0.1% or less. The powdered constituents are then tabletted to form a tablet.

Alternatively, individual layers of, for example, probiotic and prebiotic, can be formed separately. The layers formed in this way are then pressed to create the finished multilayer tablet. This pressing method has the advantage that the layers which have a different compressibility on account of their different composition can be exposed to individual pressures, which can be advantageous both with respect to the shelf life of the multilayer tablet as a whole and with respect to the stability of active ingredients in the individual layers. In addition, the boundary layer between two layers in juxtaposition has a smaller active surface due to the preforming, whereby the possibility of the reaction or destabilization of sensitive active ingredients, including the probiotic, is reduced.

2-O-glyceryl-α-D-glucopyranoside or a composition comprising 2-O-glyceryl-α-D-glucopyranoside can also be provided in capsules. The capsules according to the present invention are preferably gastric juice-resistant. 2-O-glyceryl-α-D-glucopyranoside and the probiotic microorganisms, for example, provided in said capsules are preferably freeze-dried.

According to a preferred embodiment of the present invention the at least one probiotic microorganism is selected from the group of Lactobacilli, Bifidobacteria, Streptococci, Lactococci and Saccharomyces.

According to a further preferred embodiment of the present invention 2-O-glyceryl-α-D-glucopyranoside is provided in said composition in an amount of 0,01 to 20% (w/w), preferably 0,05 to 10% (w/w), more preferably 0,1 to 5% (w/w). Of course, the prebiotic composition of the present invention may also comprise up to 30%, 40%, 50%, 60%, 70%, 75%, 80%, 85%, 90%, 95% 2-O-glyceryl-α-D-glucopyranoside.

The probiotic microorganism which may be present in the prebiotic composition of the present invention may be comprised in said composition in an amount of 10²-10¹⁰ cfu (colony forming unit)/g of the composition, preferably 10²-10⁸ cfu/g, more preferably 10²-10⁶ cfu/g.

Yet another aspect of the present invention relates to a kit comprising a first unit comprising 2-O-glyceryl-α-D-glucopyranoside and at least one further unit comprising at least one probiotic microorganism.

"Unit", as used herein, refers to a container comprising the said compounds and microorganisms.

According to a preferred embodiment the at least one probiotic microorganism is selected from the group of Lactobacilli, Bifidobacteria, Streptococci, Lactococci and Saccharomyces.

According to a preferred embodiment of the present invention 2-O-glyceryl-α-D-glucopyranoside is provided in said composition in an amount of 0,01 to 20% (w/w), preferably 0,05 to 10% (w/w), more preferably 0,1 to 5% (w/w). Of course, the prebiotic composition of the present invention may also comprise up to 30%, 40%, 50%, 60%, 70%, 75%, 80%, 85%, 90%, 95% 2-O-glyceryl-α-D-glucopyranoside.

The probiotic microorganism which may be present in the prebiotic composition of the present invention may be comprised in said composition in an amount of 10²-10¹⁰ cfu (colony forming unit)/g of the composition, preferably 10²-10⁸ cfu/g, more preferably 10²-10⁶ cfu/g.

Another aspect of the present invention relates to a method for cultivating at least one probiotic microorganism comprising cultivating said at least one microorganism in a nutrient medium comprising 2-O-glyceryl-α-D-glucopyranoside.

A nutrient medium comprising 2-O-glyceryl-α-D-glucopyranoside can be used to cultivate probiotic microorganisms. 2-O-glyceryl-α-D-glucopyranoside can be added to any nutrient medium which is suited to cultivate probiotic microorganisms. The amount of 2-O-glyceryl-α-D-glucopyranoside in said nutrient medium varies from 0,01% to 5%, preferably from 0,01% to 4%, more preferably from 0,01% to 3%, even more preferably from 0,01% to 2% (w/w). When preparing the nutrient medium 2-O-glyceryl-α-D-glucopyranoside is preferably added to the sterilized nutrient medium after being solved in water and sterile filtered.

According to a preferred embodiment of the present invention the at least one probiotic microorganism is selected from the group of Lactobacilli, Bifidobacteria, Streptococci, Lactococci and Saccharomyces.

Yet another aspect of the present invention relates to a composition obtainable from a method according to the present invention.

The present invention is further illustrated by the following figures and examples without being restricted thereto.

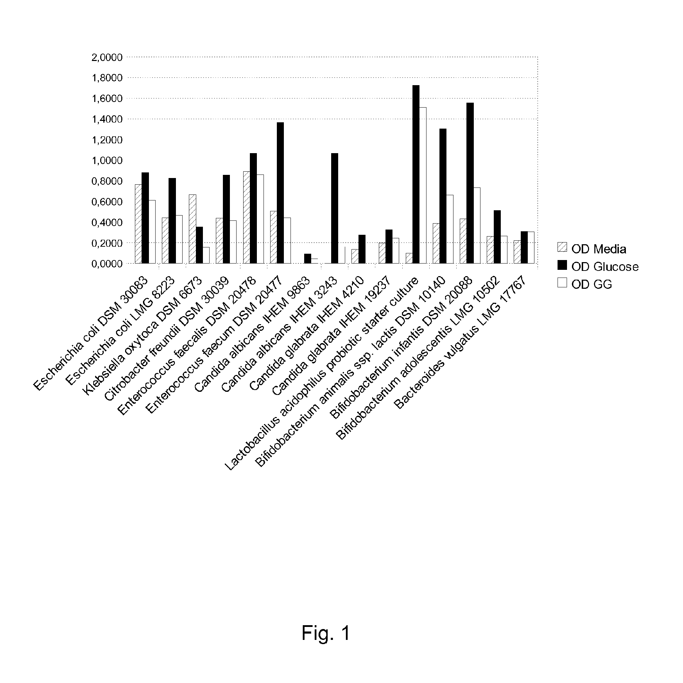

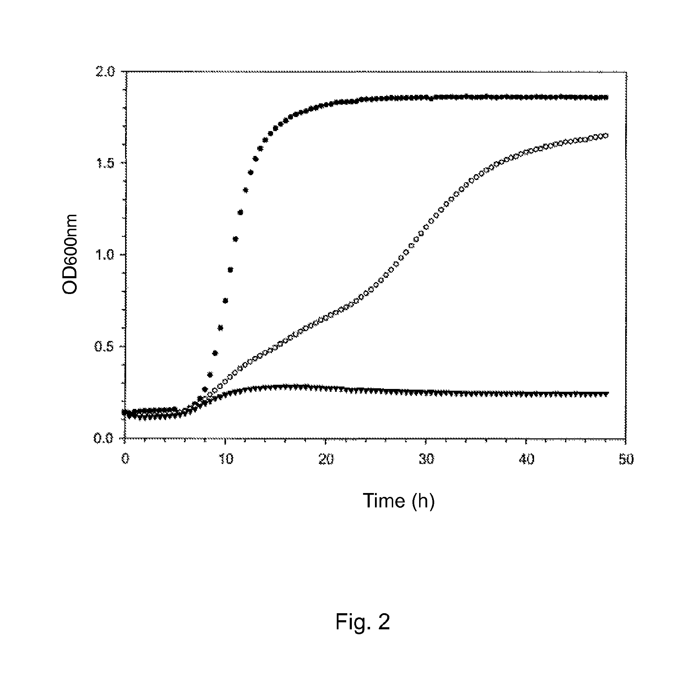

Fig. 1 shows the growth response patterns (in relation to the optical density values after 48h incubation) of different strains in media containing no carbohydrate (lined bar), 2% (w/v) glucose (black bar) and 2% (w/v) GG (white bar), respectively.Fig. 2 shows the growth kinetics of I in MRS medium in the absence (▼) and presence of 2% (w/v) glucose (•) and 2% (w/v) GG (○), respectively.

### EXAMPLE:

### Test strains

Test strains were obtained from different European culture suppliers and strain collections (Table 1).

**Table 1: Test strains used in this example**

| **Species** | **Strain (Deposit Number)** |
|---|---|
| Escherichia coli | DSM 30083 |
| Escherichia coli | LMG 8223 |
| Klebsiella oxytoca | DSM 6673 |
| Citrobacter freundii | DSM 30039 |
| Enterococcus faecalis | DSM 20478 |
| Enterococcus faecium | DSM 20477 |
| Candida albicans | IHEM 9863 |
| Candida albicans | IHEM 3243 |
| Candida glabrata | IHEM 4210 |
| Candida glabrata | IHEM 19237 |
| Bacteroides vulgatus | LMG 17767 |
| Bifidobacterium aimalis ssp. lactis | DSM 10140 |
| Bifidobacterium adolescentis | LMG 10502 |
| Bifidobacterium infantis | DSM 20088 |
| Lactobacillus acidophilus | probiotic starter culture |

Cultures were maintained in appropriate basal media. For culturing the Bifidobacteria, TRY medium was prepared with the following ingredients (g/L): tryptone (10.0), peptone from soy (5.0), yeast extract (2.5), cysteine hydrochloride (0.5), K₂HPO₄ (2.0), magnesium chloride (0.5), zinc sulphate (0.25), calcium chloride (0.15), FeCl₃ (0.01) and Tween 80 (1 mL/L), pH 6.5. Enterococci and Lactobacilli were cultured in MRS broth which was composed as follows (g/L): tryptone (10.0), meat extract (10.0), yeast extract (5.0), K₂HPO₄ (2.0), sodium acetate (5.0), ammonium citrate (2.0), magnesium sulphate (0.2), manganese sulphate (0.05) and Tween 80 (1 mL/L), pH 6.5. A Methyl-Voges-Proskauerbouillon (7 g/L peptone from meat, 5 g/L K₂HPO₄, pH 6.9) was used for E. coli, Citrobacter and Klebsiella, and a Sabouroudbouillon (5 g/L peptone from meat, 5 g/L tryptone, pH 5.4) for the Candida. Bacteroides were cultured in reinforced clostridial medium (Oxoid CM151), pH 6.8, containing the following ingredients (g/L): yeast extract (3.0), Lab-Lemco beef extract (10.0), peptone from meat (10.0), cysteine hydrochloride (0.5), sodium chloride (5.0) and sodium acetate (3.0).

### Preparation of the inoculum and inoculation of the microdilution plates

Stock solutions (4% w/v) of glucose and GG were prepared in distilled water and filter-sterilised. For inoculum preparation, individual colonies were suspended in sterile saline until a density corresponding to McFarland standard 1 was obtained. The inoculated saline suspension was then diluted 1:500 in the corresponding double concentrated carbohydrate-free test medium. Subsequently, a series of four wells containing 160 ul of the diluted inoculum and 160 µl glucose or GG stock solution, respectively, was prepared for each stain. Two wells were used as a blank containing inoculum and carbohydrate-free test medium. For the Lactobacillus, Bifidobacteria and Bacteroides 0.2 mL oxyrase (Oxyrase Inc., USA) were added to 5 ml cell suspensions to ensure anaerobic conditions throughout the screening. Furthermore, the wells were covered by two drops of sterile paraffin oil after inoculation.

Carbohydrate utilization was monitored using the turbidiometer Bioscreen C system equipped with BioLink software package (Labsystems, Finnland) which facilitates continuous optical density measurements (600 nm) at the microtiter plate level. All runs were performed at 37°C for 2 days and the turbidity of the growth medium was measured at 30 min intervals.

Prebiotic effects are usually determined by in vitro studies using mono- or mixed cultures followed by in vivo studies in animals and/or humans.

It could be shown that some microorganisms are able to metabolize prebiotics such as FOS, GOS, Lactulose with varying efficiencies.

In the course of the present examples, probiotic strains and specific intestinal bacteria and yeast have been examined upon their in vitro growth in media which comprise 2-O-glyceryl-α-D-glucopyranoside or glucose as carbon source. It could be shown that Lactobacillus acidophilus, for instance, shows an increased lag-phase when grown in a medium comprising 2-O-glyceryl-α-D-glucopyranoside in contrast to a medium comprising glucose as carbon source. Comparable lag-phases could be observed with Inulin and GS as prebioticum (Kneifel, Microbial Ecology in Health and Diseases 12 (2000): 27-34; Alander et al., Int Dairy J 11 (2001): 817-825) .

The selective hydrolisation of 2-O-glyceryl-α-D-glucopyranoside of probiotic strains, in particular the significant growth stimulating effect on Lactobacillus acidophilus as well as the decreased growth of non-probiotic strains, such as E. coli, Klebsiella, Citrobacter, Enterococci, show that 2-O-glyceryl-α-D-glucopyranoside has prebiotic properties. Furthermore, the hydrolysation of 2-O-glyceryl-α-D-glucopyranoside by different microorganisms allows the selection of synbiotic compositions comprising next to 2-O-glyceryl-α-D-glucopyranoside also respective probiotic strains.

## Claims

1. Use of 2-O-glyceryl-α-D-glucopyranoside as prebiotic.

2. Use according to claim 1, **characterised in that** 2-O-glyceryl-α-D-glucopyranoside is comprised in a prebiotic composition comprising at least one probiotic microroganism, in particular probiotic bacteria, and/or at least one compound selected from the group consisting of enzymes, vitamins, amino acids, mineral salts, preservatives, stabilizers, sweeteners, flavourings, carriers, lubricants, dispersers, thickeners, humectants and gelling agents.

3. Use according to claim 2, **characterised in that** the at least one probiotic microorganism is selected from the group of Lactobacilli, Bifidobacteria, Streptococci, Lactococci and Saccharomyces.

4. Use according to claim 2 or 3, **characterised in that** 2-O-glyceryl-α-D-glucopyranoside is provided in said composition in an amount of 0,01 to 20% (w/w), preferably 0,05 to 10% (w/w), more preferably 0,1 to 5% (w/w).

5. A composition comprising 2-O-glyceryl-α-D-glucopyranoside and at least one probiotic microorganism.

6. Composition according to claim 5, **characterised in that** the at least one probiotic microorganism is selected from the group of Lactobacilli, Bifidobacteria, Streptococci, Lactococci and Saccharomyces.

7. Composition according to claim 5 or 6, **characterised in that** 2-O-glyceryl-α-D-glucopyranoside is provided in said composition in an amount of 0,01 to 20% (w/w), preferably 0,05 to 10% (w/w), more preferably 0,1 to 5% (w/w).

8. A kit comprising a first unit comprising 2-O-glyceryl-α-D-glucopyranoside and at least one further unit comprising at least one probiotic microorganism.

9. Kit according to claim 8, **characterised in that** the at least one probiotic microorganism is selected from the group of Lactobacilli, Bifidobacteria, Streptococci, Lactococci and Saccharomyces.

10. Kit according to claim 5 or 6, **characterised in that** 2-O-glyceryl-α-D-glucopyranoside is provided in said composition in an amount of 0,01 to 20% (w/w), preferably 0,05 to 10% (w/w), more preferably 0,1 to 5% (w/w).

11. Method for cultivating at least one probiotic microorganism comprising cultivating said at least one microorganism in a nutrient medium comprising 2-O-glyceryl-α-D-glucopyranoside.

12. Method according to claim 11, **characterised in that** the at least one probiotic microorganism is selected from the group of Lactobacilli, Bifidobacteria, Streptococci, Lactococci and Saccharomyces.

13. Composition obtainable from a method according to claim 11 or 12.
